# NEW EUROPEAN PATENT SPECIFICATION

(11) **EP 0 709 340 B2**
(45) Date of publication and mention of the opposition decision: **19.12.2007**
(45) Mention of the grant of the patent: 24.03.1999
(21) Application number: 95307683.3
(22) Date of filing: 27.10.1995
(51) Int. Cl.: C01B 33/18

(54) **Method for purifying fine particulate silica**
Verfahren zur Reinigung von feinteiliger Kieselsäure
Procédé de purification de silice finement divisée

(30) Priority: 27.10.1994 JP 28899894
(43) Date of publication of application: 01.05.1996
(73) Proprietor: Shin-Etsu Chemical Co., Ltd., Chiyoda-ku, Tokyo (JP)
(72) Inventor: Nishimine, Masanobu, 2-13-1, Isobe, Annaka-shi, Gunma-Ken (JP); Tomizawa, Yoshio, 2-13-1, Isobe, Annaka-shi, Gunma-Ken (JP); Uehara, Hidekazu, 2-13-1, Isobe, Annaka-shi, Gunma-Ken (JP); Shirasuna, Kiyoshi, 2-13-1, Isobe, Annaka-shi, Gunma-Ken (JP); Ueno, Susumu, 2-13-1, Isobe, Annaka-shi, Gunma-Ken (JP)
(74) Representative: Stoner, Gerard Patrick

(56) References cited:
- EP-A- 0 044 903
- DE-B- 1 150 955
- GB-A- 1 197 271
- US-A- 3 043 659

## Description

This invention relates to a method for purifying fine particulate silica such as fumed silica by eliminating halide therefrom.

Fumed silica is widely used in the art as a filler for silicone elastomers and various other resins. In general, fumed silica is prepared by pyrogenic hydrolysis of silicon-containing halides. Since fumed silica has high surface activity and a large specific surface area, it has adsorbed thereon a substantial amount of hydrogen halide resulting from pyrogenic hydrolysis as a by-product Fumed silica bears halogen in a chemically bonded state if the reaction is incomplete. It is undesirable to use fumed silica bearing a noticeable amount of halogen as a filler without treatment. Usually, such fumed silica is used after deacidifying treatment is carried out for eliminating the halide.

Conventionally, fumed silica is deacidified by using an endless steel belt or a rotary column with transfer means for bringing fumed silica in contact with wet air at 200 to 500°C as disclosed in Japanese Patent Publication (JP-B) No. 46274/1972. Although deacidification can be done at relatively low temperatures, the apparatus Includes mechanical movable parts which tend to fail during use in a hot acidic corrosive atmosphere.

Another known deacidifying method is countercurrent contact between fumed silica and wet air as disclosed in JP-B 13832/1973. Although this method avoids to place mechanical movable parts in a hot acidic corrosive atmosphere and allows tor use of a relatively simple apparatus, the method is less efficient In that separation of coarse particles cannot be accomplished concurrently with the deacidification. The treating temperature is relatively high. DE-C-1150955 proposes a fluidised bed treatment in steam or steam/air mixture. The temperature is from 450°C to 800°C, preferally 500 to 650°C. JP-B 13832/1973 describes a comparative example using a parallel flow fluidized layer. It is described that this parallel flow fluidized layer is at a temperature of 600 to 800°C. Use of such high temperature is impractical because the material of the apparatus and the heat source are limited.

The general aim herein is the provision of new and useful processes for purifying particulate silica

A preferred aim in view of the prior art is to provide a method tor purifying fine particulate silica which uses a relatively simple apparatus In the form of a fluidized bed, carries out deacidification in a forward flow fluidized bed at relatively low temperatures, and concurrently accomplishes separation of coarse particles.

We have found that deacidification of particulate silica can be carried out at relatively low temperatures by feeding particulate silica and a higher proportion of steam to form a forward flow fluidized bed. More particularly, when steam or a mixture of steam and air in a volume ratio of 0.5/1 or higher is led along with particulate silica, with gas linear velocity of 1 to 10 cm/sec., to form a forward flow fluidized bed with particulate silica, effective deacidification takes place even at a fluidized bed temperature of 250 to 350°C. The thus established fluidized bed apparently reduces silica agglomeration therein, promotes diffusion of halide to the deacidifying gas or steam, and thus achieves efficient treatment.

According to the invention as defined in claim 1 there is provided a method for purifying fine particulate silica comprising continuously feeding halide-bearing fine particulate silica and steam, or a mixture of steam and air in a volume ratio of 0.5/1 or higher, through an upright column from its bottom toward its top for forming a fluidized bed within the column at a gas linear velocity of 1 to 10 cm/sec, and a temperature of 250 to 350°C, whereby steam causes the halide to be eliminated from the fine particulate silica, and removing the fine particulate silica from which the halide has been eliminated, having a halogen content of 20 ppm or less, from the top of the column.

### BRIEF DESCRIPTION OF THE DRAWINGS

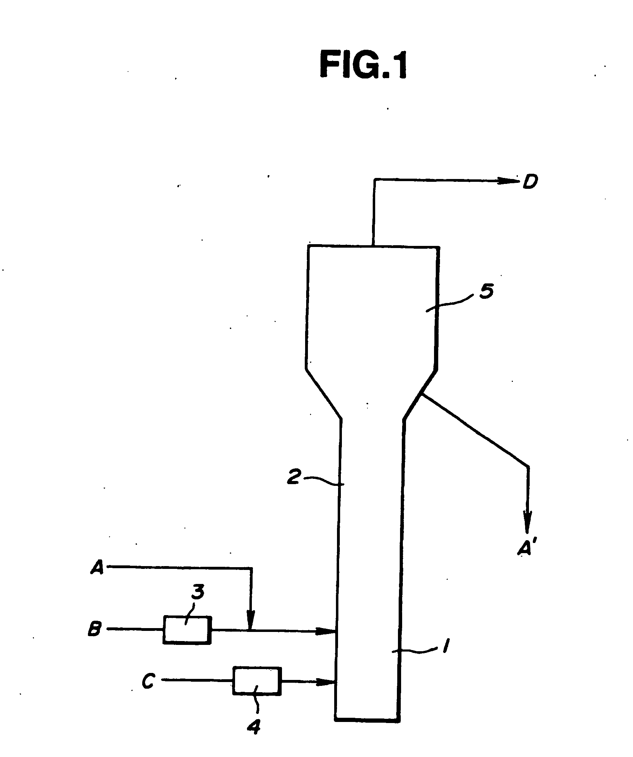

These and further features of the present invention will be apparent with reference to the following description and drawings, wherein:
the only figure, FIG. 1 schematically illustrates a system used in the practice of the method of the
invention.

### DETAILED DESCRIPTION

Referring to FIG. 1, a method for purifying fine particulate silica uses a generally upright column 1 for forming a fluidized bed therein. To the bottom of the column 1 are connected a silica line A for providing crude fine particulate silica, an air line B for providing air, and a steam line C for providing steam or steam and air. To the top of the column 1 is formed a space 5 for preventing silica particles from scattering and stabilizing the surface of silica particles which is, in turn, connected to a silica removal line A' and a gas discharge line D. Crude fine particulate silica, typically fumed silica and steam or steam and air are fed through the lines A, B and C into the column 1 at the bottom so as to flow vertically upward from the bottom toward the top. A forward flow fluidized bed 2 is created in the column 1. The treated or deacidified fine particulate silica is removed from the column top to line A'. Preheaters 3 and 4 are disposed in the lines B and C. It is noted that the line C is described as a steam line although a mixture of steam and air may be passed through the line C.

The gas used to form the fluidized bed 2 is either steam alone or steam and air, the later being typical

Any of well-known methods such as pneumatic transportation may be employed for admitting crude fine particulate silica into the column 1 at its bottom. Typically silica is admitted into the column 1 by carrying it with air along line B as shown in FIG. 1. The amount of silica fed may be properly determined. Silica is preferably fed so as to provide 0.0002 to 0.02 g of silica, more preferably 0.001 to 0.01 g of silica per cubic centimeter of the fluidized bed because effective treatment is expectable in this range.

As the gas for forming the fluidized bed 2 for treating crude fine particulate silica, steam, typically a mixture of steam and air is admitted into the column 1 at its bottom as shown in FIG. 1. According to the present invention, the proportion of steam is made high. Where air is used to carry silica to the column interior, the amount of entire steam is at least 0.5 volume, preferably 0.8 volume, more preferably at least 1 volume, most preferably more than 1 volume per volume of entire air. That is, a gas mixture of steam and air in a volume ratio of at least 0.5/1 is fed to form the fluidized bed 2. If the proportion of steam is below this limit, effective deacidifying treatment does not take place and the temperature of the fluidized bed must be increased.

The fluidized bed 2 is formed such that the fluidized bed-forming gas consisting of steam or steam and air has a linear velocity of 1 to 10 cm/sec., preferably 3 to 5 cm/sec. A linear velocity below this may fail to achieve full fluidization whereas above the range, silica particles are scattered away.

Also the fluidized bed 2 is maintained at a temperature of 250 to 350°C. Temperatures below 250°C lead to very slow deacidification, require a longer time to complete the treatment, and are thus impractical. When deacidification is at 350°C or lower, hydrocarbons can be used as thermal media. As compared with thermal media of inorganic salts, the use of hydrocarbon media eliminates operational trouble and reduces the system cost. Since the present invention operates at 350°C or lower, these advantages are available as well as a reduced cost of energy.

In order to maintain the fluidized bed at the selected temperature, the zone of the column 1 where the fluidized bed is formed is provided with heating means (not shown). It is also recommended to preheat steam and air prior to entry to the column 1. The preheaters 3 and 4 are located in the lines B and C to this end.

In the thus created fluidized bed 2, deacidification is carried out on the crude fine particulate silica. That is, steam traps or catches halides such as hydrogen halides which have been adsorbed to silica particles. The treating time is preferably 1/2 to 120 minutes, especially 1 to 20 minutes. Through such treatment pure silica having a halogen content of 20 ppm or less is readily available.

The thus deacidified or purified silica is removed from the top of the column 1 and collected through the line A'. The gas consisting of steam or steam and air from which silica has been separated is discharged from the column top to the line D. In order to prevent silica particles from scattering and stabilize the surface of powder, the space 5 of dilated diameter is disposed above the fluidized bed-forming zone of the column 1 as a precipitation/separation section.

As mentioned above, the present invention achieves the elimination of halide impurities from fine particulate silica at a reduced cost of energy using a simple apparatus. At the same time as deacidification takes place, fine particles which are lifted to the column top and collected through the outlet to the line A' are separated from large particles which do not reach the column top.

### EXAMPLE

An example of the present invention is given below by way of illustration and not by way of limitation.

### Example 1

A column having an inner diameter of 8 cm was set upright as shown in FIG. 1. Its fluidized bed zone was heated and maintained at a temperature of 300°C. From the bottom of the column, 140 g/h of fumed silica resulting from pyrogenic hydrolysis (specific surface area 195 m²/g, chlorine content 1,162 ppm), 0.15 Nm³/h of air preheated to 300°C, and 0.15 Nm³/h of steam preheated to 300°C were continuously fed into the column to form a fluidized bed within the column at a linear velocity of 3.4 cm/sec. and a temperature of 300°C where the turned silica was deacidified. Part of air was used to carry the fumed silica into the column. The thus purified fumed silica was separated from the used gas at the column top and taken out of the column. The time of deacidifying treatment was 7 minutes. By the treatment, the chlorine content of fumed silica was reduced to 14 ppm. Indicating satisfactory deacidification.

### Comparative Example

The procedure of Example was repeated except that the fluidized bed was maintained at a temperature of 300°C. 140 g/h of fumed silica, 0.25 Nm³/h of air, and 0.05 Nm³/h of steam were fed, and the treating time was 7 minutes. The thus purified fumed silica had a chlorine content of 68 ppm, indicating short deacidification.

Although some preferred embodiments have been described, many modifications and variations may be made thereto in the light of the above teachings. It is therefore to be understood that within the scope of the teachings herein, the invention may be practiced otherwise than as specifically described.

## Claims

1. A method for purifying halide-bearing fine particulate silica, comprising
continuously feeding the silica with steam, or with a mixture of steam and air at a steam:air volume ratio of at least 0.5:1, upwardly through an upright column at a gas linear velocity in the range 1 to 10 cm/s to form a fluidised bed therein, the temperature in the column being in the range 250°C to 350°C whereby the steam eliminates halide from the silica, and
removing the purified silica, having a halogen content of 20ppm or less, from the top of the column.

2. A method according to claim 1 in which a mixture of steam and air is used, the steam:air volume ratio being at least 1:1.

3. A method according to claim 1 or claim 2 in which the gas linear velocity in the column is in the range 3 to 5 cm/s.

4. A method according to any one of the preceding claims in which the feed rate of the silica is such as to provide from 0.001 to 0.01 g/cm³ silica in the fluidised bed.

5. A method according to any one of the preceding claims in which the treatment time for the silica in the column is in the range 1 to 20 minutes.

## Patentansprüche

1. Verfahren zur Reinigung von halogenidtragendem feinteiligem Siliziumoxid, umfassend:
das kontinuierliche Zuführen des Siliziumoxids mit Dampf oder mit einem Gemisch aus Dampf und Luft in einem Volumsverhältnis Dampf:Luft von zumindest 0,5:1 aufwärts durch eine aufrechte Kolonne mit linearer Gasgeschwindigkeit im Bereich von 1 bis 10 cm/s, um ein Wirbelbett darin zu bilden, wobei die Temperatur in der Säule im Bereich von 250°C bis 350°C liegt, wodurch der Dampf Halogenid aus dem Siliziumoxid eliminiert, und
das Abziehen des gereinigten Siliziumoxids mit einem Halogengehalt von 20 ppm oder weniger am Kopf der Kolonne.

2. Verfahren nach Anspruch 1, bei dem ein Gemisch aus Dampf und Luft verwendet wird, wobei das Volumsverhältnis Dampf:Luft zumindest 1:1 beträgt.

3. Verfahren nach Anspruch 1 oder 2, bei dem die lineare Gasgeschwindigkeit in der Kolonne im Bereich von 3 bis 5 cm/s liegt.

4. Verfahren nach einem der vorangegangenen Ansprüche, bei dem die Zufuhrrate des Siliziumoxids eine solche ist, daß im Wirbelbett 0,001 bis 0,01 g/cm³ Siliziumoxid bereitgestellt werden.

5. Verfahren nach einem der vorangegangenen Ansprüche, bei dem die Behandlungszeit für das Siliziumoxid in der Kolonne im Bereich von 1 bis 20 min liegt.

## Revendications

1. Méthode de purification de silice particulaire fine portant un halogénure, comprenant
l'alimentation en continu de la silice avec de la vapeur, ou avec un mélange de vapeur et d'air à un rapport en volume vapeur:air d'au moins 0,5:1, vers le haut à travers une colonne droite haute à une vitesse linéaire de gaz dans l'intervalle de 1 à 10 cm/s pour former un lit fluidisé à l'intérieur, la température dans la colonne étant dans l'intervalle de 250°C à 350°C ce par quoi la vapeur élimine l'halogénure de la silice, et
l'enlèvement de la silice purifiée ayant une teneur en halogène de 20 ppm ou moins, à partir du sommet de la colonne.

2. Méthode selon la revendication 1 dans laquelle un mélange de vapeur et d'air est utilisé, le rapport volumique vapeur:air étant d'au moins de 1:1.

3. Méthode selon la revendication 1 ou 2, dans lequel la vitesse linéaire du gaz dans la colonne est dans l'intervalle de 3 à 5 cm/s.

4. Méthode selon l'une quelconque des revendications précédentes dans laquelle le taux d'alimentation de la silice est tel qu'il fournit de 0,001 à 0,01 g/cm³ de silice dans le lit fluidisé.

5. Méthode selon l'une quelconque des revendications précédentes dans laquelle le temps de traitement de la silice dans la colonne est dans l'intervalle de 1 à 20 minutes.
